# NEUE EUROPÄISCHE PATENTSCHRIFT

(11) **EP 2 796 031 B2**
(45) Veröffentlichungstag und Bekanntmachung des Hinweises auf die Entscheidung über den Einspruch: **23.11.2022**
(45) Hinweis auf die Patenterteilung: 12.04.2017
(21) Anmeldenummer: 14155140.8
(22) Anmeldetag: 14.02.2014
(51) Int. Cl.: A01D 43/08

(54) **Landwirtschaftliche Erntemaschine**
Agricultural harvester
Moissonneuse

(30) Priorität: 24.04.2013 DE 102013104121
(43) Veröffentlichungstag der Anmeldung: 29.10.2014
(73) Patentinhaber: CLAAS Saulgau GmbH, 88348 Bad Saulgau (DE)
(72) Erfinder: Pollklas, Manfred, 33378 Rheda-Wiedenbrück (DE)

(56) Entgegenhaltungen:
- EP-A1- 1 982 573
- DE-A1- 3 243 077
- DE-A1- 4 444 054
- DE-A1- 19 638 444
- DE-U1- 8 631 062
- US-B1- 6 604 352

## Beschreibung

Die Erfindung betrifft eine landwirtschaftliche Erntemaschine, insbesondere einen selbstfahrenden Feldhäcksler, gemäß den Merkmalen des Oberbegriffs des Anspruchs 1.

Landwirtschaftliche Erntemaschinen wie insbesondere Feldhäcksler sind unter anderem mit einem Häckselaggregat ausgestattet, das dazu dient, vom Feld aufgenommenes Erntegut in Partikel gewünschter Größe zu zerkleinern. Dies geschieht kontinuierlich, indem das Häckselaggregat eine mit Messern bestückte Häckseltrommel aufweist, die sich gegenüber einer ruhenden Gegenschneide in Rotation befindet, so dass in das Häckselaggregat gefördertes Erntegut unter Zusammenwirkung von Gegenschneide und daran vorbeibewegten Häckselmessern laufend zerkleinert, nämlich "gehäckselt" wird. Aufgrund der hohen Umfangsgeschwindigkeit der Messer verlässt das gehäckselte Erntegut das Häckselaggregat anschließend mit hoher Geschwindigkeit. Diese Geschwindigkeit ist so hoch, dass der Erntegutstrom nach Durchlaufen eines Förderschachts den Feldhäcksler oberhalb des Maschinengehäuses verlassen kann. Zur Gewährleistung eines sicheren Auswurfs des Ernteguts durch eine Überladeeinrichtung ist herkömmlicherweise ein zusätzlicher Auswurfbeschleuniger vorgesehen.

Die dem Erntegut nach Passieren des Häckselaggregats innewohnende hohe kinetische Energie macht sich die DE 44 44 054 A1 zunutze. Darin wird die Möglichkeit beschrieben, stromabwärts des Häckselaggregats - bezogen auf die Gutstromrichtung - eine Nachzerkleinerungseinrichtung mit in den Gutstrom ragenden Schneidelementen anzuordnen, um das bereits gehäckselte, vom Häckselaggregat beschleunigte Erntegut weiter zu zerkleinern. Ziel dieser Nachzerkleinerung kann es sein, im Erntegut vorhandene Blätter (beispielsweise Lieschblätter) und/oder Stängel zu zerkleinern, welche das Häckselaggregat - beispielsweise aufgrund einer entsprechenden Lage bei Eintritt in das Häckselaggregat - unzerkleinert passieren konnten. Die Nachzerkleinerungseinrichtung gemäß DE 44 44 054 A1 umfasst dazu einen Träger, der mit einer Vielzahl von Schneidelementen bestückt ist, wobei der Träger mit den daran befestigten Schneidelementen um eine Schwenkachse vertikal schwenkbar und demontierbar ist. Die Schneidelemente sind starr auf dem Träger montiert. Soll die Wirksamkeit der Schneidelemente in Bezug auf den Gutstrom verändert werden, so ändert sich damit zwangsweise auch die Position des die Häckseltrommel nach unten abschirmenden Trägers, der zugleich eine das Erntegut führende Wandung der Häckseltrommel darstellt. Der Verlauf des Gutstroms wird durch eine Verstellung demnach stark beeinflusst. Die Wirksamkeit der Nachzerkleinerungseinrichtung lässt sich nicht während des Betriebs verändern.

Aus der DE 196 38 444 A1 ist eine landwirtschaftliche Erntemaschine gemäß dem Oberbegriff bekannt. Bei der Erntemaschine handelt es sich um einen Ladewagen, der zwei mit Messern bestückte Messerrahmen aufweist, welche zueinander schwenkbar gelagert sind.
Es ist eine Aufgabe der vorliegenden Erfindung, eine Erntemaschine der zuvor genannten Art anzugeben, mit welcher eine zusätzliche Zerkleinerung des gehäckselten Ernteguts erzielbar ist, möglichst ohne dass der Verlauf des Gutstroms dadurch beeinträchtigt wird. Weiterhin soll für einen Bediener der Erntemaschine eine Möglichkeit geschaffen werden, die Wirksamkeit der zusätzlichen Zerkleinerung während des Erntebetriebs zu beeinflussen, insbesondere um auf während der Ernte sich ändernde Bedingungen reagieren zu können.
Die genannte Aufgabe wird gelöst durch eine Erntemaschine gemäß den Merkmalen des Anspruchs 1. Diese zeichnet sich aus durch eine Steuereinrichtung, die betreibbar ist, das Schneidelement durch Ansteuerung eines dem Schneidelement zugeordneten Aktors aus einer inaktiven Position, in der das Schneidelement wirkungslos gegenüber dem Gutstrom ist, in zumindest eine aktive Position zu bringen, in der das Schneidelement derart in den Gutstrom hineinragt, dass dieses eine Zerkleinerungswirkung auf das Erntegut ausübt, wobei die Steuereinrichtung betreibbar ist, den Aktor zur Verstellung des zumindest einen Schneidelements in Abhängigkeit von Betriebsparametern der Erntemaschine selbsttätig anzusteuern. Erfindungsgemäß besteht damit vorteilhaft eine Möglichkeit, auch während des Erntebetriebs die auf das Erntegut ausgeübte Zerkleinerungswirkung zu verändern. Dabei kann aufgrund der aktorischen Beweglichkeit des Schneidelements relativ zum Gutstrom in vorteilhafter Weise der Verlauf des Gutstroms weitestgehend unverändert bleiben, und zwar unabhängig von der Stellung des Schneidelements. Durch die Ansteuerung des Aktors mittels der Steuereinrichtung ist für den Fahrer der Erntemaschine eine komfortable Betätigung beispielsweise aus der Fahrerkabine und/oder sogar selbsttägig möglich, ohne dass dazu eine Umbaumaßnahme und/oder manuelle Einstellung erforderlich wird. Da sich die Wirksamkeit des zumindest einen Schneidelements erfindungsgemäß während des Betriebs verstellen lässt, wird insgesamt ein effizienterer Erntebetrieb möglich, da das Schneidelement auf komfortable Weise nur noch dann eingesetzt zu werden braucht, wenn dies für den Ernteprozess zweckmäßig ist.

Die Erfindung kann an verschiedenartigen Erntemaschinen zum Einsatz kommen, die ein vergleichbares Zerkleinerungsaggregat aufweisen. Zweckmäßigerweise handelt es sich bei dem Zerkleinerungsaggregat um ein Häckselaggregat mit einer gegenüber einer ruhenden Gegenschneide rotierend antreibbaren, mit Messern bestückten Häckseltrommel.

In konstruktiver Hinsicht ist es dabei vorteilhaft, dass das zumindest eine Schneidelement eine Schneidkante aufweist, die bei Einnahme einer aktiven Position des Schneidelements derart angeordnet ist, dass das Zerkleinerungsaggregat verlassendes Erntegut auf diese auftrifft.

Eine besonders vorteilhafte Ausgestaltung ergibt sich, wenn dem Zerkleinerungsaggregat bezogen auf die Gutstromrichtung ein Leitelement, insbesondere ein gekrümmtes Leitblech zur Führung des Gutstroms nachgeordnet ist, wobei in dem Leitelement zumindest eine Öffnung vorgesehen ist, durch welche das zumindest eine Schneidelement aus der inaktiven Position - in welcher das Schneidelement quasi hinter dem Leitelement liegt - in die aktive Position bringbar ist, in welcher das Schneidelement aus dem Leitelement hervorragt.

Grundsätzlich ist es denkbar, den Aktor so zu betreiben, dass dieser das zumindest eine Schneidelement aus genau einer inaktiven in genau eine aktive Position bringen kann. Eine flexiblere Nutzbarkeit ergibt sich, wenn der Aktor darüber hinaus betreibbar ist, das zumindest eine Schneidelement in verschiedene aktive Positionen zu bringen, die sich durch eine voneinander unterscheidende Wirksamkeit hinsichtlich der Gutzerkleinerung auszeichnen. Insbesondere unterscheiden sich die verschiedenen aktiven Position somit durch voneinander abweichende Eindringtiefen des Schneidelements in den Gutstrom.

Zur Erzielung einer sicheren und gleichmäßigen Zerkleinerungswirkung kann es zweckrmäßig sein, dass die Nachzerkleinerungseinrichtung eine Vielzahl von Schneidelementen umfasst, die bezogen auf die Richtung des Erntegutstroms vorzugsweise nebeneinander (bezogen auf die Breite des Gutstroms) angeordnet sind. Auf diese Weise wird erreicht, dass das Erntegut nicht nur partiell, sondern insgesamt gleichmäßig dem Wirkungsbereich der Schneidelemente zugeführt wird, wodurch eine gleichmäßige Zerkleinerung stattfindet.

Dabei kann auf weiterhin vorteilhafte Weise eine Einrichtung zur Auswahl einer gewünschten Anzahl von zu aktivierenden Schneidelementen vorgesehen sein, um zu ermöglichen, dass beispielweise abhängig von den jeweiligen Erntebedingungen unterschiedliche Zerkleinerungswirkungen erzielt werden.

Zur weitsren Entlastung des Fahrers und/oder zur Vermeidung von bedienerseitigen Fehleinschätzungen ist es gemäß der Erfindung vorgesehen, dass die Steuereinrichtung automatisch arbeitet.

Die Steuereinrichtung könnte weiterhin betreibbar sein, bei Vorliegen bestimmter Betriebsparameter, insbesondere bei Überschreiten einer vorgebbaren Schnittlänge, eine Aktivierung des Schneidelements zu verhindern. Auf diese Weise könnte die bei hohen Schnittlängen bestehende Verstopfungsgefahr deutlich verringert werden. Die Steuereinrichtung könnte weiterhin betreibbar sein, im Rahmen eines Reinigungsvorgangs, der bevorzugt durch vorgebbare Betriebssituationen (z.B. bei Erreichen des Vorgewendes, bei Maschinenstart, bei Betriebsende, bei Einzugsstopp, wenn die Maschine keinen Durchsatz hat, bei Aktivierung der Schneidelemente) ausgelöst wird, sämtliche Schneidelemente zumindest vorübergehend in die inaktive Position zu bringen. Auf diese Weise würde in einer jeweiligen Betriebssituation eine automatische Reinigung der Schneidelemente erfolgen, so dass der Maschinenbediener von dieser Aufgabe entlastet wäre. Die Reinigungswirkung ergibt sich vorteilhaft dadurch, dass an den Schneidelementen anhaftender Schmutz durch die Bewegung in die inaktive Position abgestreift wird.

Die Erfindung sieht vor, dass die Steuereinrichtung mit zumindest einem Sensor zur Erfassung von Eigenschaften des Ernteguts in Signalverbindung steht und betreibbar ist, den Aktor zur Verstellung des zumindest einen Schneidelements in Abhängigkeit sensorisch erfasster Ernteguteigenschaften anzusteuern. Es kann sich bei den Ernteguteigenschaften um verschiedene Eigenschaften handeln. Zweckmäßigerweise handelt es sich zumindest um die Trockenmasse des Ernteguts, wobei insbesondere mit steigendem Trockenmasseanteil des Ernteguts eine intensivere Zerkleinerungswirkung durch die Nachzerkleinerungseinrichtung anzustreben wäre, um nämlich auf den bei trockenerem Erntegut tendenziell höheren Anteil von Lieschblättern und Stengeln im Erntegut (insbesondere Mais) zu reagieren.

Verschiedenartige Sensoren können dabei zum Einsatz kommen. Gemäß einer vorteilhaften Weiterbildung handelt es sich bei dem Sensor um einen optischen Sensor, insbesondere eine das geförderte Erntegut optisch erfassende Kamera, ein im Nahinfrarotbereich arbeitendes Spektroskop (Nahinfrarotsensor) und/oder um einen Leitwertsensor. Ganz allgemein kann der Sensor dazu geeignet sein Eigenschaften wie die Gutfeuchte und/oder Inhaltsstoffe und/oder Schnittlänge des Ernteguts zu erfassen.

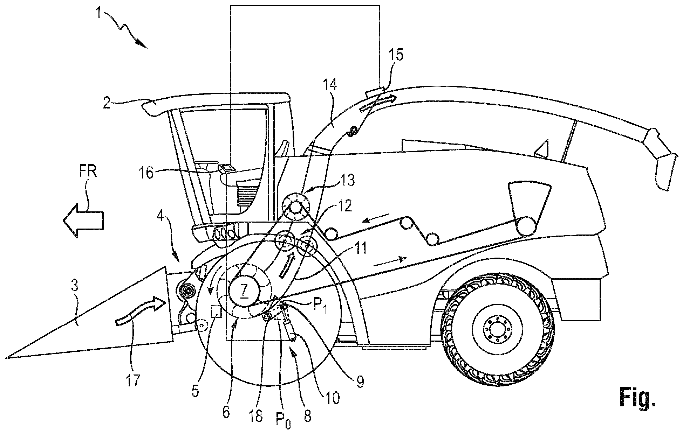

Die Erfindung wird im folgenden anhand eines in einer einzigen Fig. dargestellten Ausführungsbeispiels näher erläutert. Daraus ergeben sich auch weitere vorteilhafte Wirkungen der Erfindung. Es zeigt:
- Fig.: einen selbstfahrenden Feldhäcksler in schematischer Seitenansicht.

Die einzige Fig. zeigt eine landwirtschaftliche Erntemaschine in Form eines Feldhäckslers 1 in einer schematischen Seitenansicht von links, bezogen auf eine durch einen Pfeil angezeigte Fahrtrichtung FR. Der Feldhäcksler 1 weist auf für sich zunächst übliche Weise eine Fahrerkabine 2 auf, in welcher ein Fahrer Platz nehmen kann, um den Feldhäcksler 1 während des Betriebs zu bedienen. Die Bedienung erfolgt unter anderem über eine in der Kabine 2 angeordnete Bedien-, Anzeige- und Steuereinrichtung 16. Frontseitig ist an den Feldhäcksler 1 ein Erntevorsatz 3 angebaut, der dazu dient, auf einem zu erntenden Feld wachsenden Pflanzenbestand vom Feld abzutrennen und den weiteren Förder- und Arbeitsaggregaten des Feldhäckslers 1 zuzuführen. Gemäß einer üblichen Anwendung wird der Feldhäcksler 1 für die Ernte von Mais eingesetzt.

Nach Aufnahme des Ernteguts mittels des Erntevorsatzes 3 durchläuft das Erntegut den Feldhäcksler 1 als kontinuierlicher Gutstrom 17, angedeutet durch mehrere durch die Maschine weisende Pfeile. Dabei erfolgt zunächst eine Vorverdichtung des Gutstroms in einem mit mehreren Vorpresswalzen versehenen Einzugsaggregat 4. Anschließend tritt das Erntegut in ein Häckselaggregat 7 ein. Dieses umfasst im Wesentlichen eine in der mittels eines Pfeils angedeuteten Richtung drehende, mit einer Vielzahl von Häckselmessern bestückte Häckseltrommel 6 sowie eine gegenüber der Häckseltrommel 6 ruhende Gegenschneide 5. Unter Zusammenwirkung von Gegenschneide 5 und den daran vorbeibewegten Häckselmessern wird das passierende Erntegut im Wirkungsbereich zwischen Gegenschneide 5 und Häckseltrommel 6 zerkleinert, insbesondere gehäckselt. Aufgrund der hohen Umfangsgeschwindigkeit der Häckseltrommel 6 - und damit der Häckselmesser - verlässt das Erntegut das Häckselaggregat 7 mit einer hohen Geschwindigkeit.

Auf für sich bekannte Weise kann dem Häckselaggregat 7 eine Konditioniereinrichtung 12 nachgeordnet sein, welche beispielsweise zwei gegenläufig angetriebene Konditionierwalzen aufweist, um in einem dazwischen gebildeten Bearbeitungsspalt das Erntegut zum Zweck der besseren Verdaulichkeit für Tiere oder sonstigen Qualitätssteigerung weiter aufzuschließen.

Ein Auswurfbeschleuniger 13 dient dazu, die Geschwindigkeit des Gutstroms 17 abermals zu erhöhen, um einen sicheren Auswurf des Ernteguts durch einen maschinenoberseitig angeordneten Auswurfkrümmer 14 zu gewährleisten.

Dem Häckselaggregat 7 des Feldhäckslers 1 ist (bezogen auf die Richtung des Erntegutstroms 17) eine Nachzerkleinerungseinrichtung 9 nachgelagert, die zumindest ein in den Gutstrom 17 bringbares Schneidmesser 9 aufweist. Dazu ist ein den Erntegutstrom 17 nach unten begrenzendes Leitblech 11 mit jeweils einer (schlitzartigen) Öffnung für ein Schneidmesser 9 versehen, durch welche das Schneidmesser 9 in den Erntegutstrom 17 ragen kann. Das Schneidmesser 9 weist zweckmäßigerweise eine Schneidkante auf, die dabei so angeordnet ist, dass das Häckselaggregat 7 verlassendes Erntegut (zumindest teilweise) auf diese auftrifft, wenn das Schneidmesser 9 aktiviert ist. Aufgrund der hohen kinetischen Energie des Ernteguts kommt es so zu einem fliegenden Schnitt an der Schneidkante, wodurch im Erntegut enthaltene Blätter (beispielsweise Lieschblätter) und/oder Stengel zerkleinert werden können, die nicht schon vom Häckselaggregat in ausreichendem Maße zerkleinert wurden.

Das zumindest eine Schneidmesser 9 ist in einem Drehpunkt 18 drehbar um eine quer zur Maschinenlängsrichtung (entspricht der Fahrtrichtung FR) verlaufende Schwenkachse gelagert. Aufgrund dieser schwenkbeweglichen Lagerung lässt sich das Schneidmesser 9 zwischen zumindest einer inaktiven Position P₀, in der dieses nicht in den Gutstrom 17 hineinragt, in zumindest eine aktive Position P₁ bringen, in der das Schneidmesser 9 in den Gutstrom 17 hineinragt. Grundsätzlich kann das Schneidmesser 9 auch beliebige dazwischen liegende Positionen einnehmen, in denen das Schneidmesser 9 zwar in den Gutstrom 17 hineinragt, jedoch die Schneidkante des Schneidmessers 9 nicht dessen volle Wirkung aufweist.

Zu dessen Betätigung ist das Schneidmesser 9 in einem vom Drehpunkt 18 entfernten Fersenbereich mit einem Aktor, bevorzugt einem Stellzylinder 10 wirkverbunden. Der Stellzylinder 10 lässt sich mittels der Steuereinrichtung 16 ansteuern. Demzufolge weist der Feldhäcksler 1 eine Steuereinrichtung 16 auf, die betreibbar ist, das (zumindest eine) Schneidmesser 9 durch Ansteuerung eines dem Schneidmesser 9 zugeordneten Aktors 10 aus einer inaktiven Position P₀, in der das Schneidmesser 9 wirkungslos gegenüber dem Gutstrom 17 ist, in zumindest eine aktive Position P₁ zu bringen, in der das Schneidmesser 9 derart in den Gutstrom 17 hineinragt, dass dieses eine Zerkleinerungswirkung auf das Erntegut ausübt. Gemäß dem gezeigten Ausführungsbeispiel ergibt sich die inaktive Position P₀ des Schneidmessers 9 bei zurückgezogenem Stellzylinder 10. Dagegen wird die aktive Position P₁ bei ausgefahrenem Stellzylinder 10 erreicht.

Es sei darauf hingewiesen, dass selbstverständlich eine beliebige andere gleichwirkende Aktorik zum Einsatz kommen, mit welcher sich das Schneidmesser 9 zwischen einem inaktiven und einem aktiven Zustand betätigen lässt.

Während sich der Fig. aufgrund der seitlichen Darstellung nur das Vorhandensein eines Schneidmessers 9 entnehmen lässt, sei angemerkt, dass die Nachzerkleinerungseinrichtung 8 eine Vielzahl von Schneidmessern 9 aufweist, die bezogen auf die Richtung des Erntegutstroms 17 nebeneinander angeordnet sind. Die Schneidmesser 9 sind dabei über eine (nicht dargestellte) Mechanik derart miteinander gekoppelt, dass diese mittels des Stellzylinders 10 gemeinsam betätigbar sind. Ergänzend kann vorgesehen sein, dass sich die Anzahl zu betätigender Schneidmesser 9 über eine Auswahleinrichtung bestimmen lässt, so dass je nach Einsatzzweck mit unterschiedlicher aktiver Anzahl von Schneidmessern 9 gearbeitet werden kann.

Zur präzisen Steuerung der Zerkleinerungswirkung lassen sich die Schneidmesser 9 mittels des Stellzylinders 10 in verschiedene aktive Positionen (hier aus Darstellungsgründen nur P₁ gezeigt) bringen, die sich durch eine voneinander unterscheidende Wirksamkeit hinsichtlich der Gutzerkleinerung auszeichnen.

Im einfachsten Fall lässt sich die Steuereinrichtung 16 manuell durch einen Bediener betätigen, beispielsweise im Rahmen einen manuellen Betriebsmodus. Der Bediener kann dann eigenständig auf den Aktivierungszustand der Schneidmesser 9 Einfluss nehmen, indem er selbst entscheidet, ob und in welchem Maße die Schneidmesser 9 aktiviert werden.

Alternativ oder ergänzend steuert die Steuereinrichtung 16 den Stellzylinder 10 zur Betätigung der Schneidmesser 9 in Abhängigkeit von Betriebsparametern selbsttätig an. Hierbei kann es sich um unterschiedlichste Parameter handeln, welche für den Aktivierungszustand der Schneidmesser 9 von Bedeutung sein können.

Der Feldhäcksler 1 weist einen Sensor 15 zur Erfassung von Eigenschaften des Ernteguts auf, der mit der Steuereinrichtung 16 in Signalverbindung steht. Im gezeigten Ausführungsbeispiel handelt es sich bei dem Sensor 15 um einen optischen Sensor. Dieser ist so am Auswurfkrümmer 14 angeordnet und ausgerichtet, um daran vorbeibewegtes Erntegut optisch zu erfassen. Durch eine entsprechende Signalauswertung lassen sich Rückschlüsse auf Eigenschaften des Ernteguts ziehen, wie beispielsweise auf dessen Feuchte (bzw. Trockenmassesubstanz), Inhaltsstoffe, Schnittlänge, Rohaschegehalt und/oder sonstige. Es handelt sich bei dem optischen Sensor bevorzugt um eine Kamera und/oder um einen im Nahinfrarotsensor. Neben optischen Sensoren können alternativ oder ergänzend weitere Sensoren zur Ermittlung von Eigenschaften des Ernteguts zum Einsatz kommen, wie beispielsweise ein Leitwertsensor zur Erfassung der Feuchte (bzw. Trockenmassesubstanz) des Ernteguts.

Zur Verbesserung der Erntegutqualität es zweckmäßig, dass die Steuereinrichtung 16 die Wirksamkeit der Schneidmesser 9 insbesondere mit steigender Trockenmassesubstanz erhöht. Der Grund dafür ist, dass insbesondere in der Maisernte bei hohem Trockenmasseanteil im Erntegut ein hoher Anteil von Lieschblättern und/oder unzerkleinerten Stengeln als störend wahrgenommen wird. Ebendiese Anteile von Lieschblättern und/oder Stengelstücken lassen sich durch gezielte Nachzerkleinerung wirksam verringern.

Unabhängig von der Art der eingesetzten Sensorik kann die Steuereinrichtung 16 dazu genutzt werden, die Schneidmesser 9 in Abhängigkeit von Eigenschaften des Ernteguts in jeweils eine geeignete Position zu verstellen. Bei laufender Erfassung dieser Eigenschaften lässt sich somit bei laufendem Erntebetrieb eine selbsttätige Anpassung der Messerposition vornehmen, wodurch die Schneidmesser 9 besonders bedarfsgerecht eingesetzt werden können. Der Messerverschleiß und der Energiebedarf der Erntemaschine (Kraftstoffverbrauch) können somit vorteilhaft gesenkt werden.

Zum Schutz des Feldhäckslers 1 vor einer Blockierung des Erntegutkanals durch Erntegut ("Festfahren") kann die Steuereinrichtung 16 weiterhin betreibbar sein, bei Vorliegen bestimmter Betriebsparameter eine Aktivierung der Schneidmesser 9 zu verhindern. Dies kann insbesondere bei Überschreiten einer vorgebbaren Schnittlänge zweckmäßig sein, da mit zunehmender Schnittlänge die Gefahr von Erntegutblockaden wächst. Andere Betriebsparameter, welche eine Aktivierung der Schneidmesser 9 verhindern oder zumindest deren Wirksamkeit begrenzen sind denkbar.

Ein erhöhter Bedienkomfort der Nachzerkleinerungseinrichtung 8 ergibt sich, indem die Steuereinrichtung 16 weiterhin betreibbar ist, im Rahmen eines Reinigungsvorgangs sämtliche Schneidelemente 9 zumindest vorübergehend in die inaktive Position P₀ zu bringen. Durch ein derartiges "Einfahren" der Schneidmesser 9 in die inaktive Position P₀ führen diese bei entsprechender Konstruktion nämlich eine Selbstreinigung (Schmutzabstreifen an den Messerschlitzen im Leitblech 11) durch, so dass eine aufwendige manuelle Reinigung weitestgehend entfällt. Besonders vorteilhaft wird ein solcher Selbstreinigungsvorgang in bestimmten Betriebssituationen selbsttätig (insbesondere: ereignisgekoppelt) ausgelöst, beispielsweise bei Erreichen des Feldendes, bei Abschalten des Häckseltrommelantriebs, bei Unterbrechung des Gutflusses oder dergleichen.

Die in der Fahrerkabine 2 angeordnete Steuereinrichtung 16 verfügt - neben einer Bedieneinrichtung - auch über eine Anzeigeeinheit. Dem Fahrer wird darauf der Aktivierungszustand, ggf. auch die genaue Eindringtiefe der Schneidmesser 9 angezeigt.

### Bezugszeichenliste

- 1: Feldhäcksler
- 2: Fahrerkabine
- 3: Erntevorsatz
- 4: Einzugsaggregat
- 5: Gegenschneide
- 6: Häckseltrommel
- 7: Häckselaggregat
- 8: Nachzerkleinerungseinrichtung
- 9: Schneidmesser
- 10: Stellzylinder
- 11: Leitblech
- 12: Konditioniereinrichtung
- 13: Auswurfbeschleuniger
- 14: Auswurfkrümmer
- 15: optischer Sensor
- 16: Bedien-, Anzeige- und Steuereinrichtung
- 17: Erntegutstrom
- 18: Drehpunkt

- P₀: inaktive Position
- P₁: aktive Position
- FR: Fahrtrichtung

## Patentansprüche

1. Landwirtschaftliche Erntemaschine (1), insbesondere selbstfahrender Feldhäcksler mit einem Zerkleinerungsaggregat (7) zur kontinuierlichen Zerkleinerung von in Form eines Gutstroms (17) durch das Zerkleinerungsaggregat (7) gefördertem Erntegut, wobei dem Zerkleinerungsaggregat (7) bezogen auf die Gutstromrichtung eine Nachzerkleinerungseinrichtung (8) nachgelagert ist, die zumindest ein in den Gutstrom (17) bringbares Schneidelement (9) aufweist, mit einer Steuereinrichtung (16), die betreibbar ist, das Schneidelement (9) durch Ansteuerung eines dem Schneidelement (9) zugeordneten Aktors (10) aus einer inaktiven Position (P0), in der das Schneidelement (9) wirkungslos gegenüber dem Gutstrom (17) ist, in zumindest eine aktive Position (P1) zu bringen, in der das Schneidelement (9) derart in den Gutstrom (17) hineinragt, dass dieses eine Zerkleinerungswirkung auf das Erntegut ausübt, wobei die Steuereinrichtung (16) betreibbar ist, den Aktor (10) zur Verstellung des zumindest einen Schneidelements (9) in Abhängigkeit von Betriebsparametern der Erntemaschine (1) selbsttätig anzusteuern, **dadurch gekennzeichnet, dass** die Steuereinrichtung (16) mit zumindest einem Sensor (15) zur Erfassung von Eigenschaften des Ernteguts in Signalverbindung steht und betreibbar ist, den Aktor (10) zur Verstellung des zumindest einen Schneidelements (9) in Abhängigkeit sensorisch erfasster Ernteguteigenschaften anzusteuern.

2. Erntemaschine nach Anspruch 1, **dadurch gekennzeichnet, dass** es sich bei dem Zerkleinerungsaggregat um ein Häckselaggregat (7) mit einer gegenüber einer ruhenden Gegenschneide (5) rotierend antreibbaren, mit Messern bestückten Häckseltrommel (6) handelt.

3. Erntemaschine nach Anspruch 1 oder 2, **dadurch gekennzeichnet, dass** das zumindest eine Schneidelement (9) eine Schneidkante aufweist, die bei Einnahme einer aktiven Position (P₁) des Schneidelements (9) derart angeordnet ist, dass das Zerkleinerungsaggregat (7) verlassendes Erntegut auf diese auftrifft.

4. Erntemaschine nach einem der vorigen Ansprüche, **dadurch gekennzeichnet, dass** dem Zerkleinerungsaggregat (7) bezogen auf die Gutstromrichtung ein Leitelement, insbesondere ein gekrümmtes Leitblech (11)zur Führung des Gutstroms (17) nachgeordnet ist, wobei in dem Leitelement (11) zumindest eine Öffnung vorgesehen ist, durch welche das zumindest eine Schneidelement (9) aus der inaktiven Position (P₀) in die aktive Position (P₁) bringbar ist.

5. Erntemaschine nach einem der vorigen Ansprüche, **dadurch gekennzeichnet, dass** der Aktor (10) betreibbar ist, das zumindest eine Schneidelement (9) in verschiedene aktive Positionen (P₁) zu bringen, die sich durch eine voneinander unterscheidende Wirksamkeit hinsichtlich der Gutzerkleinerung auszeichnen.

6. Erntemaschine nach einem der vorigen Ansprüche, **dadurch gekennzeichnet, dass** die Nachzerkleinerungseinrichtung (8) eine Vielzahl von Schneidelementen (9) umfasst, die bezogen auf die Richtung des Erntegutstroms (17) vorzugsweise nebeneinander angeordnet sind.

7. Erntemaschine nach einem der vorigen Ansprüche, **gekennzeichnet durch** eine Einrichtung zur Auswahl einer gewünschten Anzahl von zu aktivierenden Schneidelementen (9).

8. Erntemaschine nach einem der vorigen Ansprüche, **dadurch gekennzeichnet, dass** die Steuereinrichtung (16) manuell durch einen Bediener betätigbar ist.

9. Erntemaschine nach einem der vorigen Ansprüche, **dadurch gekennzeichnet, dass** die Steuereinrichtung (16) betreibbar ist, bei Vorliegen bestimmter Betriebsparameter, insbesondere bei Überschreiten einer vorgebbaren Schnittlänge, eine Aktivierung des Schneidelements (9) zu verhindern.

10. Erntemaschine nach einem der vorigen Ansprüche, **dadurch gekennzeichnet, dass** die Steuereinrichtung (16) betreibbar ist, im Rahmen eines Reinigungsvorgangs, der bevorzugt durch vorgebbare Betriebssituationen ausgelöst wird, sämtliche Schneidelemente (9) zumindest vorübergehend in die inaktive Position (P₀) zu bringen.

11. Erntemaschine nach Anspruch 1, **dadurch ge-kennzeichnet, dass** es sich bei dem Sensor um ei-nen optischen Sensor (15), insbesondere eine das geförderte Erntegut optisch erfassende Kamera, ei-nen Nahinfrarotsensor und/oder um einen Leitwert-sensor handelt.

12. Erntemaschine nach einem der vorigen Ansprüche, **dadurch gekennzeichnet, dass** die Steuereinrichtung (16) betreibbar ist, den Aktor (10) zur Verstel-lung des zumindest einen Schneidelements (9) in Abhängigkeit der Trockensubstanz des Ernteguts anzusteuern.

## Claims

1. An agricultural harvester (1), in particular a self-propelled forage harvester, comprising a shredding assembly (7) for continuous shredding of crop material conveyed in the form of a flow of material (17) through the shredding assembly, wherein disposed downstream of the shredding assembly (7) with respect to the direction of crop material flow is a post-shredding device (8) having at least one cutting element (9) which can be brought into the crop material flow (17), and a control device (16) operable by actuation of an actuator (10) associated with the cutting element (9) to move the cutting element (9) out of an inactive position (P0) in which the cutting element (9) is ineffective in relation to the crop material flow (17) into at least one active position (P1) in which the cutting element (9) projects into the crop material flow (17) in such a way that it exerts a shredding action on the crop material, where the control device (16) is operable to actuate automatically the actuator (10) for displacement of the at least one cutting element (9) in dependence on operating parameters of the harvester (1), **characterised in that** the control device (16) is in signal communication with at least one sensor (15) for detecting properties of the crop material and is operable to actuate the actuator (10) for displacement of the at least one cutting element (9) in dependence on crop material properties detected by the sensor

2. A harvester according to claim 1 **characterised in that** the shredding assembly is a chopping assembly (7) having a chopping drum (6) which is fitted with blades and which is drivable in rotation in relation to a stationary counterpart cutting member (5).

3. A harvester according to claim 1 or claim 2 **characterised in that** the at least one cutting element (9) has a cutting edge which when an active position (P₁) of the cutting element (9) is adopted is so arranged that crop material leaving the shredding assembly (7) impinges on the cutting edge.

4. A harvester according to one of the preceding claims **characterised in that** arranged downstream of the shredding assembly (7) in relation to the crop material flow direction is a guide element, in particular a curved guide plate (11), for guiding the crop material flow (17), wherein provided in the guide element (11) is at least one opening through which the at least one cutting element (9) is moveable from the inactive position (P₀) into the active position (P₁).

5. A harvester according to one of the preceding claims **characterised in that** the actuator (10) is operable to move the at least one cutting element (9) into various active positions (P₁) which are distinguished by a mutually differing effectiveness in regard to crop material shredding.

6. A harvester according to one of the preceding claims **characterised in that** the post-shredding device (8) includes a plurality of cutting elements (9) which are preferably arranged in mutually adjoining relationship with respect to the direction of the crop material flow (17).

7. A harvester according to one of the preceding claims **characterised by** a device for selecting a desired number of cutting elements (9) to be activated.

8. A harvester according to one of the preceding claims **characterised in that** the control device (16) is actuable manually by an operator.

9. A harvester according to one of the preceding claims **characterised in that** the control device (16) is operable to prevent activation of the cutting element (9) in the existence of given operating parameters, in particular when a predeterminable cutting length is exceeded.

10. A harvester according to one of the preceding claims **characterised in that** the control device (16) is operable in the context of a cleaning operation which is preferably triggered by predeterminable operating situations to move all cutting elements (9) at least temporarily into the inactive position (P₀).

11. A harvester according to claim 1 **characterised in that** the sensor is an optical sensor (15), in particular a camera which optically detects the conveyed crop material, a near-infrared sensor and/or a conductivity sensor.

12. A harvester according to one of the preceding claims **characterised in that** the control device (16) is operable to actuate the actuator (10) for displacement of the at least one cutting element (9) in dependence on the dry substance of the crop material.

## Revendications

1. Machine agricole de récolte (1), en particulier ensileuse automotrice, comprenant un groupe de broyage (7) pour le broyage continu d'un produit de récolte transporté à travers le groupe de broyage (7) sous la forme d'un flux de produit (17), le groupe de broyage (7) étant suivi, dans le sens du flux de produit, d'un dispositif de broyage secondaire (8) qui présente au moins un élément de coupe (9) pouvant être placé dans le flux de produit (17), et comprenant un dispositif de commande (16) qui peut être mis en œuvre pour amener l'élément de coupe (9), par la commande d'un actionneur (10) associé à l'élément de coupe (9), d'une position inactive (P0), dans laquelle l'élément de coupe (9) est sans action par rapport au flux de produit (17), à au moins une position active (P1) dans laquelle l'élément de coupe (9) dépasse dans le flux de produit (17), de sorte qu'il exerce une action de broyage sur le produit de récolte, cependant le dispositif de commande (16) peut être mis en œuvre pour commander automatiquement l'actionneur (10) en vue de régler ledit au moins un élément de coupe (9) en fonction de paramètres de fonctionnement de la machine de récolte (1), **caractérisée en ce que** le dispositif de commande (16) est en liaison de signalisation avec au moins un capteur (15) de détection de propriétés du produit de récolte et peut être mis en œuvre pour commander l'actionneur (10) en vue de régler ledit au moins un élément de coupe (9) en fonction de propriétés du produit de récolte détectées par ledit au moins un capteur.

2. Machine de récolte selon la revendication 1, **caractérisée en ce que** le groupe de broyage est un groupe hacheur (7) présentant un tambour hacheur (6) qui peut être entraîné en rotation par rapport à un contre-couteau fixe (5) et qui est équipé de couteaux.

3. Machine de récolte selon la revendication 1 ou la revendication 2, **caractérisée en ce que** ledit au moins un élément de coupe (9) présente une arête de coupe qui, lorsque l'élément de coupe (9) adopte une position active (P₁), est disposée de façon que le produit de récolte qui quitte le groupe de broyage (7) rencontre celle-ci.

4. Machine de récolte selon l'une des revendications précédentes, **caractérisée en ce que** le groupe de broyage (7) est suivi, dans le sens du flux de produit, d'un élément de guidage, en particulier d'une tôle de guidage incurvée (11) pour guider le flux de produit (17), dans l'élément de guidage (11) étant prévue au moins une ouverture à travers laquelle ledit au moins un élément de coupe (9) peut être amené de la position inactive (P₀) à la position active (P₁) .

5. Machine de récolte selon l'une des revendications précédentes, **caractérisée en ce que** l'actionneur (10) peut être mis en œuvre pour amener ledit au moins un élément de coupe (9) dans différentes positions actives (P₁) qui se distinguent par une efficacité différente en termes de broyage du produit.

6. Machine de récolte selon l'une des revendications précédentes, **caractérisée en ce que** le dispositif de broyage secondaire (8) comprend une pluralité d'éléments de coupe (9) qui sont de préférence disposés les uns à côté des autres par rapport à la direction du flux de produit de récolte (17).

7. Machine de récolte selon l'une des revendications précédentes, **caractérisée par** un dispositif de sélection d'un nombre souhaité d'éléments de coupe (9) à activer.

8. Machine de récolte selon l'une des revendications précédentes, **caractérisée en ce que** le dispositif de commande (16) peut être actionné manuellement par un opérateur.

9. Machine de récolte selon l'une des revendications précédentes, **caractérisée en ce que** le dispositif de commande (16) peut être mis en œuvre pour empêcher une activation de l'élément de coupe (9) en présence de certains paramètres de fonctionnement, en particulier en cas de dépassement d'une longueur de coupe prédéfinissable.

10. Machine de récolte selon l'une des revendications précédentes, **caractérisée en ce que** le dispositif de commande (16) peut être mis en œuvre, dans le cadre d'une opération de nettoyage déclenchée de préférence par des situations de fonctionnement prédéfinissables, pour amener tous les éléments de coupe (9) au moins temporairement dans la position inactive (P₀).

11. Machine de récolte selon la revendication 1, **caractérisée en ce que** le capteur est un capteur optique (15), en particulier une caméra détectant optiquement le produit de récolte transporté, un capteur proche infrarouge et/ou un capteur de conductivité.

12. Machine de récolte selon l'une des revendications précédentes, **caractérisée en ce que** le dispositif de commande (16) peut être mis en œuvre pour commander l'actionneur (10) en vue de régler ledit au moins un élément de coupe (9) en fonction de la matière sèche du produit de récolte.
